# EUROPEAN PATENT SPECIFICATION

(11) **EP 1 474 619 B1**
(45) Date of publication and mention of the grant of the patent: **21.02.2007**
(21) Application number: 01983792.1
(22) Date of filing: 31.10.2001
(51) Int. Cl.: F16D 66/02, F16D 65/097

(54) **A SYSTEM FOR FIXING AN ELECTRIAL CONNECTION ELEMENT TO THE CALIPER OF A DISK BRAKE**
EINRICHTUNG ZUR BEFESTIGUNG EINES ELEKTRISCHEN VERBINDERS AN EINEM SCHEIBENBREMSSATTEL
SYSTEME DE FIXATION D'UN ELEMENT DE CONNEXION ELECTRIQUE SUR UN ETRIER DE FREIN A DISQUE

(43) Date of publication of application: 10.11.2004
(73) Proprietor: Freni Brembo S.p.A., 24035 Curno (IT)
(72) Inventor: CRIPPA, Cristian, I-24031 Almenno San Salvatore (IT)
(74) Representative: Siniscalco, Fabio
(86) International application number: PCT/IT2001/000555
(87) International publication number: WO 2003/038298

(56) References cited:
- DE-A- 2 505 877
- DE-A- 2 854 357
- US-A- 4 742 326

## Description

The present invention relates to disk brakes and, more particularly, to a system for fixing an electrical connection element to a disk-brake caliper, as defined in the preamble of Claim 1.

It is known and is usual for both disk and drum brakes to be provided with devices, generally known as wear indicators, which can detect the state of wear of the friction linings. Existing devices differ in their operating principle and in their structural configuration; in motor-vehicle disk brakes, electrical wear indicators which use a sensor associated with a pad of the brake caliper are widely used. These indicators transmit the signal, which comes from the sensor and is indicative of the wear of the pad, through an electrical wire terminating in a connection element which in turn is connected, by means of another electrical wire, to an indicator disposed, for example, on the dashboard of the motor vehicle. The connection element is generally fixed to the disk-brake caliper by means of one or more screws. The caliper is shaped so as to have a seat for the connection element and a boss with one or more threaded holes for the fixing screw or screws. This involves the manufacture of the caliper for the use of a specific connection element so that it is not possible to fit on the caliper a connection element other than that provided for. Moreover, the formation of the seat and of the boss with the threaded hole require specific machining operations, and hence additional costs. Finally, assembly is quite laborious.

Document DE 28 54 357 discloses a system for fixing an electrical connection element to a disk-brake caliper.

The object of the present invention is to provide a system for fixing an electrical connection element to a disk-brake caliper which does not require special machining operations on the caliper and which is quick and easy to assemble.

This object is achieved, according to the invention, by the provision of a fixing system as defined and characterized in general in the first claim.

The invention will be understood further from the following detailed description of an embodiment thereof, given by way of non-limiting example, with reference to the appended drawings, in which:
Figure 1 is a partial perspective view of a disk brake with a known fixing system,
Figure 2 is a partial perspective view of a disk brake with a fixing system according to the invention,
Figures 3 to 6 are perspective views which show in detail the parts which make up the fixing system according to the invention and their relative mounting positions, and
Figures 7 and 8 show, in section, an element of the fixing system according to the invention, in two assembly stages.

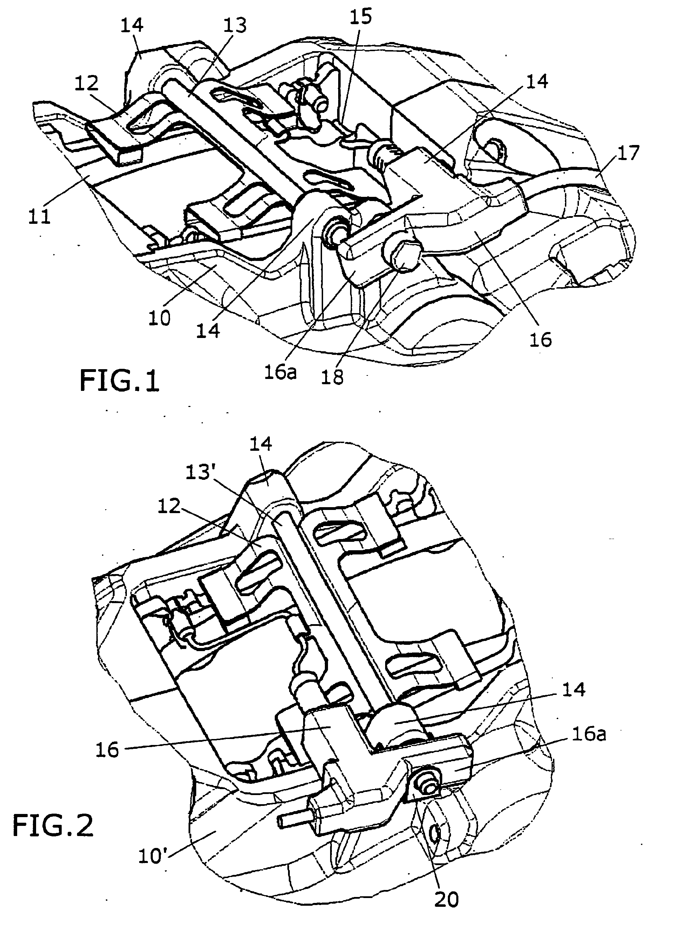

Figure 1 shows a caliper 10 of a disk brake of known type having two pads 11 provided with friction linings, not visible in the drawing. The pads are housed in the caliper body and are held in position by a flat spring 12 which in turn is restrained by a pin 13. The pin 13 is fixed at its ends to two drilled projections 14 of the caliper and is restrained axially by suitable fixing means, for example, by resilient elements which expand inside the holes in the projections. The pin 13 compresses the flat spring 12 which in turn holds the pads 11 in their seats by means of suitably-shaped arms. Calipers of other known types have two pins which support the pads directly, extending through slots provided for the purpose in the pads.

A wear sensor, for example, an electrical contact incorporated in one of the pads has, as an output terminal, an electrical wire 15 the free end of which has a plug-in contact element which is not visible in the drawing since it is inserted in a corresponding seat of an electrical connection element 16. This connection element 16 has a body made of insulating material, which is fixed to the caliper and from which another electrical wire 17 extends, for transmitting the sensor signal to an indicator or other user device. For the fixing of the electrical connection element 16, the caliper has a boss with a threaded hole and the connection element 16 has an appendage 16a with a through-hole; fixing is achieved by a screw 18 inserted in the through-hole and screwed into the threaded hole of the caliper body. As can be seen, the caliper has to be shaped and prepared for use with an electrical connection element of specific dimensions and shape and requires special machining operations.

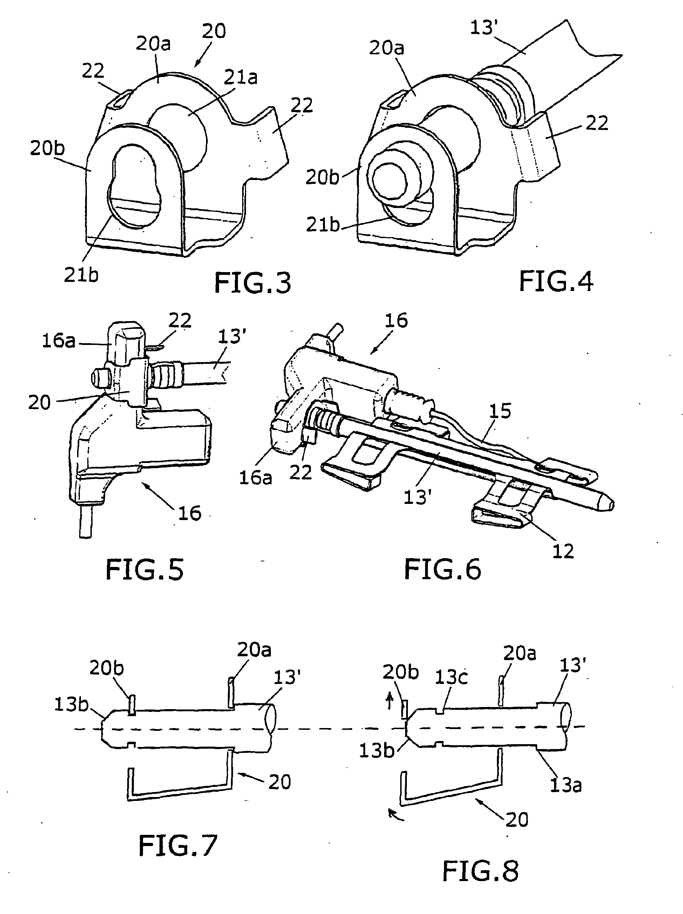

Figure 2, in which elements identical to those of Figure 1 are indicated by the same reference symbols, will now be considered. It is pointed out, first of all, that the caliper, indicated 10' in this case, has no threaded holes or parts which are machined specially for the fixing of the connection element 16, and that the pin which restrains the spring 12 (see also Figure 6) and which is indicated 13' in this case, differs from that of the known disk brake substantially solely in that it is longer; more precisely, it has an end portion which projects from the caliper. In this embodiment, this end portion is of smaller diameter and thus forms an annular abutment surface 13a (Figure 8); it also has a chamfered tip 13b and an annular groove 13c in the vicinity of the tip. It is also pointed out that, in this embodiment, the electrical connection element 16 is identical to that of Figure 1.

The fixing system according to the invention differs from the known system in that the fixing of the electrical connection element 16 to the caliper 10' requires no special preparations of the caliper but is achieved with the use of the pin 13' and of a coupling element 20. The coupling element 20 engages the connection element 16, the pin 13', and the caliper 10', fixing the connection element 16 firmly to the caliper 10'.

As can be seen in Figure 3, in the embodiment shown, the coupling element is constituted by a metal bracket 20 having two facing flanges 20a and 20b each having a hole 21a or 21b, respectively.

The hole 21a in the flange 20a is a circular hole with a diameter smaller than the diameter of the pin 13' and slightly larger than the diameter of the end portion of the pin, so as to permit the insertion thereof. The hole 21b in the flange 20b which will be remote from the caliper after mounting is a slot defined by a first arc of a circle of a diameter equal to that of the hole 21a, and by a second arc of a circle of a diameter smaller than that of the end portion of the pin 13' and, more precisely, equal to the diameter of the pin in the region of the annular groove 13c. The two arcs are preferably connected to one another by two short parallel straight portions, as shown in Figure 3. The centre of the smaller-diameter circle arc and the centre of the hole 21a are on a common axis perpendicular to the surface of the flange 20a. A catch is thus formed for restraining the bracket on the pin axially, as is clear from Figure 4 and from the explanation of the assembly which will be given below.

The flange 20a of the bracket 20 has two tabs 22 which are bent outwardly relative to the bracket at right angles and are spaced apart so that their surfaces are in abutment with the lateral surface of the drilled projection 14 of the caliper when the bracket is placed close to the caliper with the hole 21a coaxial with the hole in the projection 14.

The bracket 20 has dimensions such that it grasps the appendage 16a of the electrical connection element 16 with minimal clearance and that the holes open into the through-hole of the appendage 16a when the appendage 16a is in contact with the transverse portion of the bracket. The system for fixing the electrical connection element to the caliper is assembled upon completion of the usual operations for the assembly of the disk brake, including the insertion of the pin 13'. At this point, the appendage 16a of the electrical connection element 16 is placed in the bracket 20, with the holes aligned, and the whole assembly is fitted on the end portion of the pin 13' that projects from the projection 14, until the rim portion around the hole 21b in the flange 20b and, more precisely, around the smaller-diameter portion of the hole 21b, is caused to enter the annular groove 13c of the pin 13'. When this occurs, the flange 20a of the bracket 20 is disposed against the annular abutment surface 13a and the right-angled tabs 22 of the bracket 20 are positioned on the sides of the projection 14. It is pointed out that, in order to arrange for the flange 20b of the bracket to snap-engage in the groove 13c of the pin 13, the bracket is made of resilient sheet-metal and, in the rest position, the arc of the circle of smaller diameter of the hole 21b in the flange 20b has its centre slightly out of alignment with the hole 21a in the flange 20a and with the axis of the pin 13', as shown in Figure 8. During assembly, the tip 13b of the pin 13' tends to move the flange 20b in the direction indicated by the arrows of Figure 8, causing the transverse side of the bracket to bend until the rim around the hole 21b in the flange 20b has reached the groove 13c; at this point, the flange 20b is fitted in the groove 13c under the effect of the resilient force, as shown in Figure 7. It is easy to see the advantages of the invention over the prior art; the fixing of the electrical connection element of the sensor requires no specific structural elements of the caliper or special machining operations thereon, but is achieved with the use of elements which are already present in a conventional disk brake, that is, a pin for restraining the spring which holds the pads, or a pin for supporting the pads and, in the embodiment described, the drilled projection provided for the fixing of the pin. The sole additional element in the embodiment shown is a part which is easy to manufacture, such as the perforated and bent plate which forms the bracket 20. Moreover, assembly is extremely quick and easy.

Although only one embodiment of the invention has been described and illustrated, clearly many variations and modifications may be applied within the scope of the same inventive concept as defined by the apended claims. For example, the axial restraint between the bracket and the pin may be achieved by a conventional split ring and the bracket may be made of plastics material and is not necessarily resilient.

## Claims

1. A system for fixing an electrical connection element (16) to a disk-brake caliper(10') having a pin(13') fixed to the caliper(10') and a wear sensor electrically connected to the electrical connection element (16), **characterized in that** it comprises a coupling element (20,22) suitable for engaging the electrical connection element (16), an end portion of the pin (13'), and the caliper(10').

2. A fixing system according to Claim 1 in which the electrical connection element (16) has an appendage (16a) having a through-aperture and the coupling element comprises a bracket (20) which grasps the appendage (16a) and has two flanges (20a and 20b) with holes (21a and 21b) substantially aligned with the aperture of the appendage (16a), and in which said end portion projects from the caliper(10') and extends through the holes in the bracket (20) and the aperture of the appendage (16a).

3. A fixing system according to Claim 2, comprising axial restraining means (20b, 13c) between the bracket (20) and the pin(13'), and in which the coupling element (20) comprises rotational restraining means (22) fixed firmly to the bracket and preventing rotation of the bracket (20) about the pin (13').

4. A fixing system according to Claim 3, in which the coupling element (20) is made of bent and shaped sheet-metal and in which the rotational restraining means comprise at least one element (22) projecting from the bracket and engaging in abutment with an edge portion of the caliper.

5. A fixing system according to Claim 4, in which the edge portion of the caliper comprises a projection (14) with a substantially cylindrical surface coaxial with the pin (13') and the element projecting from the bracket is a tab (22) formed integrally with the bracket.

6. A fixing system according to any one of Claims 3 to 5, in which the axial restraining means between the bracket and the pin comprise a peripheral groove (13c) in the pin (13') and catch means (20b) which engage the groove.

7. A fixing system according to Claim 6 when it is dependent on Claim 4 or Claim 5, in which the sheet-metal plate which forms the bracket (20) is made of resilient material and in which the catch means comprise a rim portion around the hole in the bracket flange (20b) remote from the caliper.

8. A fixing system according to Claim 7 in which the end portion of the pin (13') terminates in a tip (13b) which can be inserted in the hole in the bracket flange (20b) remote from the caliper(10'), and which can displace that flange (20b) resiliently, in order to snap-engage the rim portion around the hole (21b) in the groove (13c).

9. A disk brake with a fixing system according to any one of the preceding claims.

## Patentansprüche

1. Ein System zum Befestigen eines elektrischen Verbindungselements (16) an einem Scheibenbremsensattel (10'), das einen Stift (13'), der an dem Sattel (10') befestigt ist, und einen Abnutzungssensor aufweist, der an dem elektrischen Verbindungselement (16) elektrisch befestigt ist, **dadurch gekennzeichnet, dass** dasselbe ein Kopplungselement (20, 22) umfasst, das geeignet ist für eine Ineingriffnahme des elektrischen Verbindungselements (16), eines Endabschnitts des Stifts (13') und des Sattels (10').

2. Ein Befestigungssystem gemäß Anspruch 1, bei dem das elektrische Verbindungselement (16) einen Anhang (16a) aufweist, der eine Durchgangsöffnung aufweist, und das Kopplungselement eine Halterung (20) umfasst, die den Anhang (16a) greift, und zwei Flansche (20a und 20b) mit Löchern (21a und 21b) aufweist, die im Wesentlichen mit der Öffnung des Anhangs (16a) ausgerichtet sind, und bei dem der Endabschnitt von dem Sattel (10') vorsteht und sich durch die Löcher in der Halterung (20) und die Öffnung des Anhangs (16a) erstreckt.

3. Ein Befestigungssystem gemäß Anspruch 2, das eine axiale Beschränkungseinrichtung (20b, 13c) zwischen der Halterung (20) und dem Stift (13') umfasst, und bei dem das Kopplungselement (20) eine Drehbeschränkungseinrichtung (22) umfasst, die fest an der Halterung befestigt ist und die Drehung der Halterung (20) um den Stift (13') verhindert.

4. Ein Befestigungssystem gemäß Anspruch 3, bei dem das Kopplungselement (20) aus gebogenem und geformten Blech hergestellt ist und bei dem die Drehbeschränkungseinrichtung zumindest ein Element (22) aufweist, das von der Halterung vorsteht und einen Randabschnitt des Sattels aneinandergrenzend in Eingriff nimmt.

5. Ein Befestigungssystem gemäß Anspruch 4, bei dem der Randabschnitt des Sattels einen Vorsprung (14) umfasst, mit einer im Wesentlichen zylindrischen Oberfläche, die koaxial mit dem Stift (13') ist, und das Element, das von der Halterung vorsteht, eine Nase (22) ist, die einstückig mit der Halterung gebildet ist.

6. Ein Befestigungssystem gemäß einem der Ansprüche 3 bis 5, bei dem die axiale Beschränkungseinrichtung zwischen der Halterung und dem Stift eine Umfangsrille (13c) in dem Stift (13') und eine Arretierungseinrichtung (20b) umfasst, die die Rille in Eingriff nehmen.

7. Ein Befestigungssystem gemäß Anspruch 6 in Rückbezug auf Anspruch 4 oder Anspruch 5, bei dem die Blechplatte, die die Halterung (20) bildet, aus elastischem Material gebildet ist, und bei dem die Arretiereinrichtung einen Felgenabschnitt um das Loch in dem Halterungsflansch (20b) entfernt von dem Sattel umfasst.

8. Ein Befestigungssystem gemäß Anspruch 7, bei dem der Endabschnitt des Stifts (13') in einer Spitze (13b) endet, die in das Loch in dem Halterungsflansch (20b) entfernt von dem Sattel (10') eingefügt werden kann, und die diesen Flansch (20b) elastisch verschieben kann, um den Felgenabschnitt um das Loch (21b) in der Rille (13c) einschnappend in Eingriff zu nehmen.

9. Eine Scheibenbremse mit einem Befestigungssystem gemäß einem der vorhergehenden Ansprüche.

## Revendications

1. Système destiné à fixer un élément de connexion électrique (16) à un étrier de frein à disque (10') comportant une broche (13') fixée à l'étrier (10') et un capteur d'usure connecté électriquement à l'élément de connexion électrique (16), **caractérisé en ce qu'**il comprend un élément d'accouplement (20, 22) approprié pour engager l'élément de connexion électrique (16), une partie d'extrémité de la broche (13') et l'étrier (10').

2. Système de fixation selon la revendication 1, dans lequel l'élément de connexion électrique (16) comporte un élément de fixation (16a) présentant une ouverture traversante et l'élément d'accouplement comprend une patte de fixation (20) qui s'accroche à l'élément de fixation (16a) et comporte deux brides (20a et 20b) ayant des trous (21a et 21b) sensiblement alignés avec l'ouverture de l'élément de fixation (16a) et où ladite partie d'extrémité dépasse de l'étrier (10') et s'étend à travers les trous dans la patte de fixation (20) et l'ouverture de l'élément de fixation (16a).

3. Système de fixation selon la revendication 2, comprenant un moyen de limitation axiale (20b, 13c) entre la patte de fixation (20) et la broche (13') et où l'élément d'accouplement (20) comprend un moyen de limitation de rotation (22) fixé fermement à la patte de fixation et empêchant une rotation de la patte de fixation (20) autour de la broche (13').

4. Système de fixation selon la revendication 3, dans lequel l'élément d'accouplement (20) est constitué d'une tôle pliée et façonnée et où le moyen de limitation de rotation comprend au moins un élément (22) dépassant de la patte de fixation et s'engageant en butée avec une partie de bord de l'étrier.

5. Système de fixation selon la revendication 4, dans lequel la partie de bord de l'étrier comprend une protubérance (14) ayant une surface sensiblement cylindrique, coaxiale avec la broche (13') et l'élément dépassant de la patte de fixation est une languette (22) formée de façon solidaire de la patte de fixation.

6. Système de fixation selon l'une quelconque des revendications 3 à 5, dans lequel le moyen de limitation axiale entre la patte de fixation et la broche comprend une rainure périphérique (13c) dans la broche (13') et un moyen de prise (20b) qui s'engage dans la rainure.

7. Système de fixation selon la revendication 6 lorsqu'elle dépend de la revendication 4 ou de la revendication 5, dans lequel la tôle qui forme la patte de fixation (20) est constituée d'un matériau élastique et dans lequel le moyen de prise comprend une partie de bordure autour du trou de la bride de patte de fixation (20b) distante de l'étrier.

8. Système de fixation selon la revendication 7, dans lequel la partie d'extrémité de la broche (13') se termine en un bout (13b) qui peut être inséré dans le trou de la bride de patte de fixation (20b) à l'écart de l'étrier (10') et qui peut déplacer cette bride (20b) de façon élastique, afin d'engager par encliquetage la partie de bordure autour du trou (21b) dans la rainure (13c).

9. Frein à disque ayant un système de fixation conforme à l'une quelconque des revendications précédentes.
